# EUROPÄISCHE PATENTANMELDUNG

(11) **EP 4 571 269 A1**
(43) Veröffentlichungstag der Anmeldung: **18.06.2025**
(21) Anmeldenummer: 24213098.7
(22) Anmeldetag: 14.11.2024
(51) Int. Cl.: G01D 5/249, G01D 5/347

(54) **VORRICHTUNG UND VERFAHREN ZUR POSITIONS-, LÄNGEN- ODER WINKELBESTIMMUNG**

(30) Priorität: 11.12.2023 DE 102023134634
(71) Anmelder: SICK AG, 79183 Waldkirch (DE)
(72) Erfinder: Hirmer, Katrin, 78166 Donaueschingen (DE); Sellmer, Christian, 78166 Donaueschingen (DE); Hopp, David, 78166 Donaueschingen (DE)
(74) Vertreter: Manitz Finsterwald Patent- und Rechtsanwaltspartnerschaft mbB

(57) **Zusammenfassung**

Vorrichtung zur Positions-, Längen-, oder Winkelbestimmung, mit einem ersten und einem zweiten Teil, welche relativ zueinander bewegbar sind. An dem ersten Teil ist eine absolute Codierung aus einer Vielzahl von aufeinander folgenden Codeabschnitten erster Art und zweiter Art angebracht. An dem zweiten Teil ist eine Auslesevorrichtung zur Erfassung der Codierung angebracht, wobei die Auslesevorrichtung mehrere Sensoren umfasst, welche jeweils zur Erfassung der Codeabschnitte ausgebildet sind und einen entsprechenden Messwert ausgeben. Ferner umfasst die Vorrichtung eine Auswerteinheit, welche dazu ausgebildet ist, eine Relativposition zwischen dem ersten und dem zweiten Teil zu bestimmen. Die Auslesevorrichtung umfasst zumindest eine, insbesondere mehrere, bevorzugt analoge, Differenzschaltungen. Die besagten Differenzschaltungen sind dazu ausgebildet, eine Differenz der Messwerte zweier zueinander benachbarter Sensoren zu bilden und als Differenzsignal auszugeben. Die Auswerteinheit ist dazu ausgebildet, die Relativposition zwischen dem ersten und dem zweiten Teil unter Berücksichtigung dieser Differenzsignale zu ermitteln. Ferner wird ein entsprechendes Verfahren zur Positions-, Längen-, oder Winkelbestimmung beschrieben.

## Beschreibung

Die vorliegende Erfindung betrifft eine Vorrichtung zur Positions-, Längen- oder Winkelbestimmung sowie ein entsprechendes Verfahren.

Vorrichtungen zur Positions-, Längen- oder Winkelbestimmung, die auch als Encoder bezeichnet werden, sowie entsprechende Verfahren können in einer Vielzahl von technischen Bereichen eingesetzt werden. Beispielsweise können solche Vorrichtungen in Werkzeugmaschinen Verwendung finden, wobei eine Positions- oder Winkelmessung eines Werkzeugs relativ zu dem Werkstück ermöglicht wird. Andere Einsatzbereiche sind Drehwinkelsensoren, beispielsweise für Motor-Feedback-Systeme.

Herkömmlicher Weise umfasst eine entsprechende Vorrichtung einen ersten und einen zweiten Teil, wobei der erste und der zweite Teil relativ zueinander bewegbar sind. An dem ersten Teil ist eine absolute Codierung aus einer Vielzahl von aufeinander folgenden Codeabschnitten erster Art und zweiter Art angebracht. An dem zweiten Teil ist eine Auslesevorrichtung zur Erfassung der Codierung angebracht. Die Auslesevorrichtung umfasst mehrere Sensoren, welche jeweils zur Erfassung der Codeabschnitte ausgebildet sind und einen entsprechenden Messwert ausgeben. Ferner umfassen derartige Vorrichtungen eine Auswerteinheit, welche dazu ausgebildet ist, basierend auf diesen Messwerten eine Relativposition zwischen dem ersten und dem zweiten Teil zu bestimmen.

Durch derartige Vorrichtungen ist es möglich, zumindest grob die Relativposition zwischen den beiden Teilen zu bestimmen. Um die Auflösung der Relativposition zu verbessern, wird regelmäßig ergänzend zu der absoluten Codierung eine zusätzliche Codierung, beispielsweise in Gestalt einer Inkrementalspur, mit einer zugehörigen weiteren Auslesevorrichtung vorgesehen. Anhand der Messwerte der weiteren Auslesevorrichtung erfolgt dann eine nachgelagerte Korrektur bzw. Verfeinerung der Bestimmung der Relativposition. Diese Inkrementalspur und zusätzliche Auslesevorrichtung benötigen jedoch zusätzlichen Bauraum und sind mit zusätzlichen Kosten verbunden.

Vor diesem Hintergrund ist es eine Aufgabe der vorliegenden Erfindung, eine Möglichkeit zu bieten, welche eine hochaufgelöste Bestimmung der Relativposition zwischen dem ersten Teil und dem zweiten Teil ermöglicht, ohne auf die Auswertung der Relativposition anhand einer weiteren Codierung, insbesondere in Gestalt einer Inkrementalspur, angewiesen zu sein.

Diese Aufgabe wird dadurch gelöst, dass die Auslesevorrichtung zumindest eine, insbesondere mehrere, bevorzugt analoge, Differenzschaltungen umfasst. Diese Differenzschaltungen sind dazu ausgebildet, eine Differenz der Messwerte zweier zueinander benachbarter Sensoren der Auslesevorrichtung zu bilden und als Differenzsignal auszugeben. Die Auswerteinheit ist dazu ausgebildet, die Relativposition zwischen dem ersten und dem zweiten Teil unter Berücksichtigung der erhaltenen Differenzsignale zu ermitteln.

Mit anderen Worten, die an sich bekannte Bestimmung der Relativposition zwischen dem ersten und dem zweiten Teil erfolgt nicht lediglich unmittelbar basierend auf den Messwerten der Sensoren, sondern unter Berücksichtigung der Differenzwerte der Signale jeweils zweier benachbarter Sensoren. Durch die erfindungsgemäß vorgesehenen Differenzschaltungen ist es möglich, die Signalflanken im zeitlichen Verlauf der Messwerte der Sensoren zuverlässig zu Identifizieren und basierend hierauf auf die zugehörigen Übergänge zwischen Bereichen von aufeinander folgenden Codeabschnitten der ersten Art und Bereichen von aufeinander folgenden Codeabschnitten der zweiten Art zu schließen. Anhand der identifizierten Übergänge kann dann darauf geschlossen werden, wo der identifizierte Abschnitt der absoluten Codierung genau innerhalb des Erfassungsbereich der Sensoren liegt. Hieraus kann sehr genau auf die jeweilige Relativposition zwischen dem ersten und dem zweiten Teil geschlossen werden, ohne auf eine zweite Codierung, beispielsweise in Gestalt einer Inkrementalspur, zurückgreifen zu müssen. Die bevorzugt analoge Differenzbildung verhindert eine Verzerrung der Messergebnisse, welche sich durch eine vorangehende Digitalisierung ergeben könnten. Auch ist die analoge Differenzbildung schneller und ressourcenschonender (bezüglich Rechenkapazität) als eine digitale Differenzbildung.

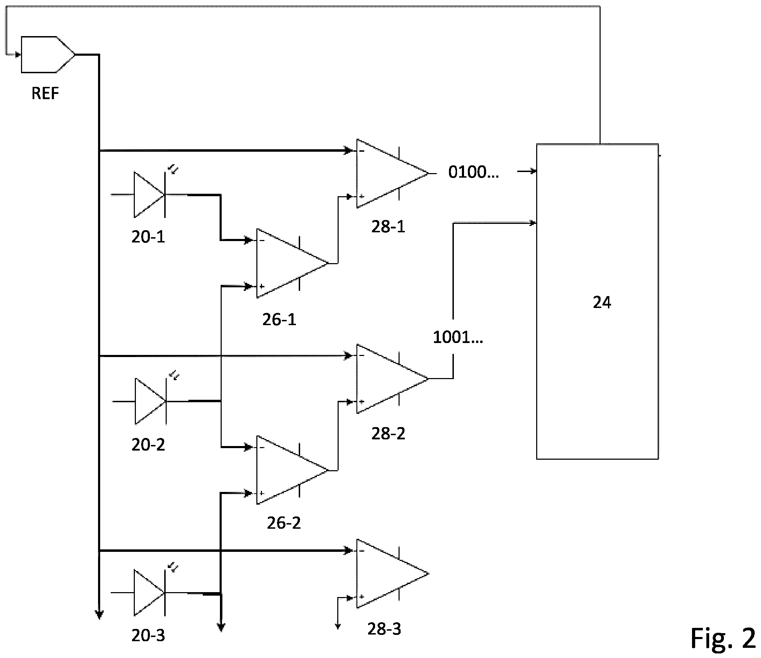

In diesem Zusammenhang sei darauf hingewiesen, dass die erhaltenen Differenzsignale im Sinne der vorliegenden Erfindung nicht unmittelbar zur Bestimmung der Relativposition verwendet werden müssen. Wie nachfolgend mit Bezugnahme auf Fig. 2 beschrieben wird, kann vor der Auswertung durch die Auswerteinheit noch eine Aufbereitung und/oder Digitalisierung der Differenzsignale, beispielsweise über Komparatoren, erfolgen. Dies ändert im vorliegenden Verständnis nichts daran, dass die Ermittlung der Relativposition unter Berücksichtigung der Differenzsignale erfolgt.

Bevorzugt bilden jeweils mehrere Codeabschnitte ein Codewort. So können z.B. Codewörter jeweils aus 4, 8 oder 10 einzelnen Codeabschnitten bestehen, wodurch sich dann ein 4-, 8- oder 1 0-Bit Code ergibt. Bevorzugt ist in der Codierung jedes Codewort nur ein einziges Mal vorhanden, sodass sich ein Absolutcode bzw. eine absolute Codierung ergibt.

Insbesondere ist die Größe der Codeabschnitte und die Größe der von einzelnen Sensoren erfasste Bereich der Codierung so gewählt, dass jeweils genau zwei Sensoren oder zumindest zwei Sensoren einen einzelnen Codeabschnitt erfassen, insbesondere wenn der Codeabschnitt genau bei den beiden Sensoren zu liegen kommt.

Insbesondere umfasst die Vorrichtung zumindest doppelt so viele Sensoren wie Bits pro Codewort, bevorzugt viermal so viele Sensoren wie Bits pro Codewort.

Im Betrieb kann die Vorrichtung zunächst auf herkömmliche Weise, insbesondere auch ohne die genannte Differenzbildung, den Absolutcode auslesen und auf diese Weise bereits eine Grob-Position der Relativposition erfassen. Zusätzlich kann gemäß der Erfindung über die Differenzbildung noch eine Fein-Position der Relativposition erfasst werden. Wird bei der Erfassung der Grob-Position beispielsweise festgestellt, dass "gegenüber" von zwei Sensoren ein Codeabschnitt erster Art (z.B. ein heller Bereich) liegt, kann über die Differenzbildung die Position des Codeabschnitts noch genauer erfasst werden. Ragt beispielsweise ein benachbarter Codeabschnitt zweiter Art (z.B. ein dunkler Bereich) Bereits in den Erfassungsbereich eines der beiden Sensoren hinein, so wird das von diesem Sensor erzeugte Signal abgeschwächt. Statt eines Signals von beispielsweise "1" kann dieser Sensor dann z.B. nur ein Signal von "0,8" liefern. Dadurch ergibt sich als Ergebnis der Differenzschaltung nicht Null, sondern "0,2". Die "Position" der Flanke bzw. genauer gesagt des Übergangs zwischen den verschiedenen Codeabschnitten kann folglich genauer bestimmt werden. Dadurch kann dann ermittelt werden, dass die Relativposition von erstem und zweitem Teil nicht ganz exakt der Grob-Position entspricht, sondern z.B. um 20% der Länge des von einem Sensor erfassten Bereichs korrigiert werden sollte. Auf diese Weise kann die Genauigkeit der Positionsmessung erhöht werden.

Zudem ist von Vorteil, dass ein Offset-Fehler, der z.B. durch thermische Effekte erzeugt werden kann, minimiert wird. Der Offset-Fehler betrifft in der Regel beide an der Differenzschaltung angeschlossene Sensoren, sodass der Offset-Fehler bei der Differenzbildung eliminiert wird.

Überdies ergibt sich der Vorteil, dass für viele Positionen der Codierung nach der Differenzbildung eine höhere Amplitude vorliegt, als bei Auswertung nur eines Sensors. Beispielsweise würde bei lediglich einem Sensor und einer hälftigen Überdeckung mit einem dunklen Bereich ein Signal mit einer Amplitude von 50% vorliegen, wohingegen bei der Differenzbildung ein Sensor 100% und der andere Sensor 0% Amplitude liefern würde, was nach der Differenzbildung zu einer Amplitude von 100% führt.

Bevorzugt ist jede Differenzschaltung über einen ersten Eingang mit einem ersten Sensor der Auslesevorrichtung und über einen zweiten Eingang mit einem zweiten Sensor der Auslesevorrichtung, welcher zum ersten Sensor benachbart angeordnet ist, gekoppelt.

Bevorzugt ist ein Komparator zwischen wenigstens eine, insbesondere jede, der Differenzschaltungen und die Auswerteinheit geschaltet. Jeder dieser Komparatoren ist dazu ausgebildet, das Differenzsignal, insbesondere dessen Stromstärke oder Spannung, von der vorgeschalteten Differenzschaltung mit einem Referenzsignal, insbesondere dessen Stromstärke oder Spannung, einer Referenzeinheit zu vergleichen und ein entsprechendes Vergleichssignal an die Auswerteinheit auszugeben.

Mit anderen Worten, das Differenzsignal aus den Differenzschaltungen wird nicht direkt an die Auswerteinheit übermittelt, um dort anhand eines festen Schwellenwerts binarisiert zu werden. Vielmehr wird das Differenzsignal zuvor in Bezug zu einem Referenzsignal gesetzt. Das Referenzsignal definiert dabei effektiv einen variablen Schwellenwert. Durch die Variation des Schwellenwerts zur Binarisierung ist es möglich eine noch genauere Bestimmung der Signalflanken und damit der Übergänge zwischen zusammenhängenden Bereichen von Codeabschnitten gleicher Art innerhalb des Erfassungsbereichs der Sensoren vorzunehmen. Dies ermöglicht eine noch genauere Auflösung der Relativposition zwischen dem ersten Teil und dem zweiten Teil. Eine eindeutige Abtrennung dieser Komparatoren von der Auswerteinheit ist weder notwendig noch technisch sinnvoll. Mit anderen Worten, die Komparatoren, ggf. zusammen mit der Referenzeinheit, können (anders als dies in Fig. 2 dargestellt ist) auch als Komponenten der Auswerteinheit verstanden werden.

Bevorzugt ist die Referenzeinheit (REF) dazu ausgebildet, ein sich, insbesondere periodisch wiederholendes, zeitlich variierendes Referenzsignal an die vorgesehenen Komparatoren auszugeben, welche diese dann mit den jeweiligen Messwerten vergleichen.

Insbesondere erfolgt dabei die Variation des Referenzsignals im Vergleich zu einer zu erwartenden schnellsten Änderung der Messwerte (also bei Sensoren, welche einen kontinuierlichen Messwert ausgeben im Vergleich zur maximal vorgesehenen Geschwindigkeit der Relativbewegung; und bei Sensoren, welche gepulst Messwerte ausgeben, im Vergleich zur Ausgabefrequenz der Sensoren) relativ schnell. Konkret wird das Referenzsignal derart erzeugt, dass den Komparatoren effektiv jeder einzelne Differenzwert mit mindestens zwei, bevorzugt mehr als zwei, unterschiedlichen Referenzwerten verglichen wird. Dies ermöglicht eine Mehrfach-Binarisierung der Differenzwerte und damit eine noch genauere Auflösung der Übergänge zwischen den zusammenhängenden Bereichen von Codeabschnitten gleicher Art und damit der Relativposition zwischen dem ersten und dem zweiten Teil.

Bevorzugt ist ein Ausgang jeder Differenzschaltung mit einem ersten Eingang eines zugehörigen Komparators gekoppelt und die Referenzeinheit mit einem zweiten Eingang jedes der vorgesehenen Komparatoren gekoppelt.

Somit wird sichergestellt, dass in jedem Komparator dasselbe Referenzsignal mit dem jeweiligen Differenzsignal verglichen wird. Dies ermöglicht in der Auswerteinheit einen erleichterten Vergleich der Vergleichssignale von den unterschiedlichen Komparatoren ohne die Notwendigkeit aufwendiger Korrekturen.

Bevorzugt ist jeder Sensor mit wenigstens einer Differenzschaltung gekoppelt. Insbesondere sind bei n Sensoren n-1 Differenzschaltungen vorgesehen, wobei n-2 Sensoren jeweils mit zwei Differenzschaltungen gekoppelt sind und zwei Sensoren jeweils mit nur einer Differenzschaltung gekoppelt sind.

Indem jeder Sensor mit wenigstens einer, bevorzugt zwei, Differenzschaltungen gekoppelt ist, kann eine besonders genaue Bestimmung der Relativposition zwischen dem ersten und dem zweiten Teil erfolgen. Bei einer Vorrichtung zur Winkelmessung können die Sensoren gleichmäßig entlang eines Kreisrings angeordnet sein. Dann hat jeder Sensor zwei direkte Nachbarn, was es ermöglicht bei n Sensoren n Differenzschaltungen vorzusehen, wobei jeder Sensor mit genau zwei Differenzschaltungen gekoppelt ist.

Bevorzugt handelt es sich bei den Sensoren um optische Sensoren, insbesondere in Gestalt von Photodioden, um magnetische Sensoren, um kapazitive Sensoren oder um induktive Sensoren.

Derartige Sensoren sind besonders ausgereift und günstig zu beziehen. Beispielsweise können die Sensoren auch als Hall-Sensoren ausgebildet sein.

Bevorzugt sind der erste und der zweite Teil entweder rein translatorisch oder rein rotatorisch relativ zueinander bewegbar. Die Sensoren sind dabei parallel zur Codierung nebeneinander angeordnet.

Die rein translatorische oder rein rotatorische Relativbewegung ist jeweils relativ einfach umzusetzen und auszuwerten. Die zur Codierung parallele Anordnung der Sensoren ermöglicht es auf eine Korrektur der Messwerte, welche durch eine variable Distanz der Sensoren von der Codierung notwendig wäre, zu verzichten.

Bevorzugt weisen die Codeabschnitte jeweils eine gleiche Größe und/oder einen gleichen Versatz zueinander auf.

Dies erleichtert die Auswertung der Messwerte und damit die Bestimmung der Relativposition zwischen dem ersten und dem zweiten Teil erheblich.

Schließlich betrifft die vorliegende Erfindung auch ein Verfahren zur Positions-, Längen-, oder Winkelbestimmung. Bei diesem werden ein erster und ein zweiter Teil relativ zueinander bewegt. Zuvor wird an dem ersten Teil eine absolute Codierung aus einer Vielzahl von Codeabschnitten erster und zweiter Art angebracht. Eine an dem zweiten Teil angebrachte Auslesevorrichtung erfasst die Codierung. Die Auslesevorrichtung umfasst mehrere Sensoren, welche jeweils zur Erfassung der Codeabschnitte ausgebildet sind und einen entsprechenden Messwert ausgeben. Erfindungsgemäß wird wenigstens ein Differenzsignal von Messwerten zweier benachbarter Sensoren erzeugt und unter Berücksichtigung dessen eine absolute Relativposition zwischen dem ersten und dem zweiten Teil bestimmt wird.

Insbesondere werden dabei mehrere Differenzsignale benachbarter Sensoren erzeugt und zur Bestimmung der Relativposition herangezogen. Die erfindungsgemäße Bildung von Differenzsignalen ermöglicht eine zuverlässige und genaue Bestimmung von Signalflanken im Verlauf der Messwerte der Sensoren und damit eine besonders genaue Bestimmung von Übergängen zwischen zusammenhängenden Bereichen von Codeabschnitten gleicher Art. Dies ermöglicht eine genauere Auflösung der Relativposition, als dies lediglich dadurch möglich wäre, zu bestimmen, welcher Abschnitt der absoluten Codierung gegenwärtig im Erfassungsbereich der Sensoren liegt.

Die vorstehenden Erläuterungen zur erfindungsgemäßen Vorrichtung gelten für das erfindungsgemäße Verfahren entsprechend. Dies gilt insbesondere für Vorteile und Ausführungsformen.

Nachfolgend wird die Erfindung beispielhaft unter Bezugnahme auf die Zeichnungen beschrieben. Dabei zeigt:
- Fig. 1: eine schematische Ansicht des Aufbaus einer beispielhaften erfindungsgemäßen Vorrichtung zur Positions- oder Längenbestimmung; und
- Fig. 2: eine schematische Ansicht einer Weiterbildung der Vorrichtung aus Fig. 1.

In den Figuren bezeichnen gleiche Bezugszeichen gleiche oder ähnliche Merkmale.

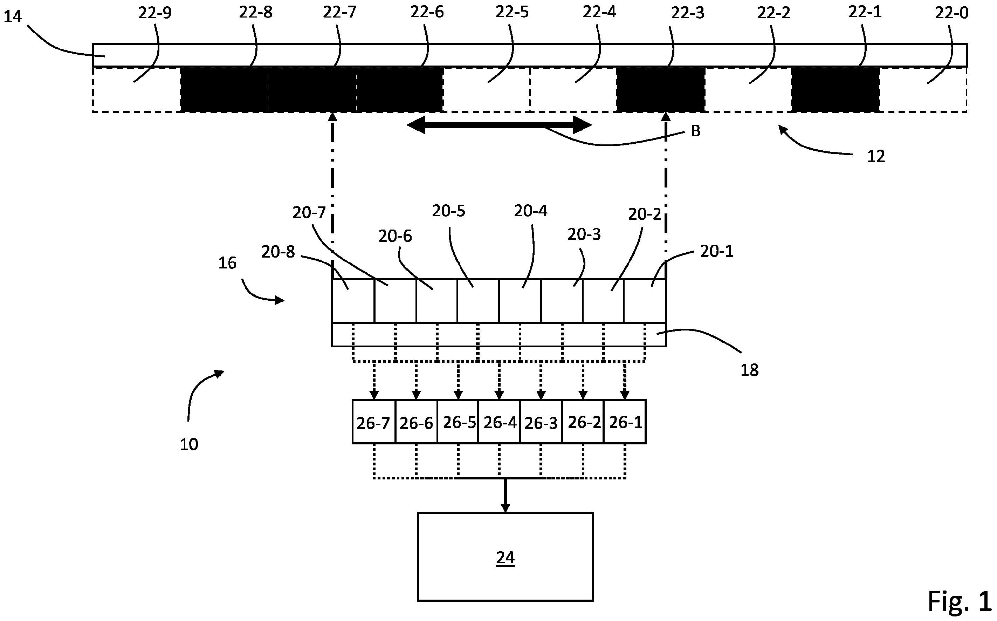

Fig. 1 zeigt schematisch den Aufbau einer erfindungsgemäße Vorrichtung 10 zur Positions- oder Längenbestimmung. Die gezeigte Vorrichtung 10 dient als Encoder, beispielsweise in einem Motor-Feedback-System (nicht gezeigt).

Die Vorrichtung 10 umfasst einen ersten Teil 14, an welchem eine absolute Codierung 12 angebracht ist. Die Vorrichtung 10 umfasst ferner einen zweiten Teil 18, an welchem eine Auslesevorrichtung 16 angebracht ist. Die Codierung 12 und die Auslesevorrichtung 16 sind an dem ersten Teil 14 und an dem zweiten Teil 18 derart befestigt, dass sie sich gemeinsam mit den beiden Teilen 14 und 18 relativ zueinander bewegen. Der erste Teil 14 und der zweite Teil 18 - und damit die Codierung 12 sowie die Auslesevorrichtung 16 - sind im vorliegenden Beispiel rein translatorisch relativ zueinander bewegbar (siehe den Doppelpfeil B). Rein rotatorische Relativbewegungen sind für einen Fachmann auch ohne weiteres umzusetzen.

Die Codierung 12 ist durch eine Vielzahl aufeinander folgender Codeabschnitte 22-0 bis 22-9 erster Art (weiß dargestellt) und zweiter Art (schwarz dargestellt) gebildet. In Fig. 1 sind lediglich zehn solcher Codeabschnitte 22-0 bis 22-9 abgebildet. Die Codierung 12 kann zu den abgebildeten Codeabschnitten 22-0 bis 22-9 links und/oder rechts noch weitere Codeabschnitte umfassen. Dies würde eine Bestimmung der Relativposition zwischen den beiden Teilen 14 und 18 über einen größeren Bereich hinweg ermöglichen, als dies mit den abgebildeten zehn Codeabschnitten 22-0 bis 22-9 möglich wäre.

Die Auslesevorrichtung 16 umfasst vorliegend acht Sensoren 20-1 bis 20-8, beispielsweise in Gestalt von Photodioden, wobei die Sensoren 20-1 bis 20-8 parallel zur Codierung 12 nebeneinander angeordnet sind. Die Sensoren 20-1 bis 20-8 sind auf die Codierung 12 ausgerichtet und zur Erfassung der unterschiedlichen Codeabschnitte 22-0 bis 22-9 der Codierung 12 ausgebildet.

Für eine gleichmäßige Beleuchtung der Codeabschnitte 22-0 bis 22-9 kann eine Lichtquelle (nicht gezeigt) vorgesehen sein, welche zumindest diejenigen Codeabschnitte 22-0 bis 22-9 beleuchtet, welche im Erfassungsbereich der Sensoren 20-1 bis 20-8 (der Bereich zwischen den beiden gestrichelt-doppelgepunkteten Pfeilen) liegen. Jeder der Sensoren 20-1 bis 20-8 empfängt - je nach Art der Codeabschnitte 22-0 bis 22-9 in dessen Erfassungsbereich - eine bestimmte Menge von durch die jeweiligen Codeabschnitte 22-0 bis 22-9 reflektierten oder transmittierten Lichts. Die Sensoren 20-1 bis 20-8 geben daraufhin einen entsprechenden Messwert aus, beispielsweise in Gestalt eines Spannungs- oder Stromwerts.

Zur erleichterten Auswertung der Messwerte der Sensoren 20-1 bis 20-8 sind die Codeabschnitte 22-0 bis 22-9 jeweils räumlich identisch zueinander ausgebildet. Vorliegend wird angenommen, dass der Erfassungsbereich jedes Sensors 20-1 bis 20-8 halb so breit ist, wie die einzelnen Codeabschnitte 22-0 bis 22-9 lang sind. Die Sensoren 20-1 bis 20-8 sind derart auf die Codierung 12 ausgerichtet, dass sie einen zusammenhängenden Erfassungsbereich (siehe den Bereich zwischen den gestrichelt-doppelgepunktet Pfeilen in Fig. 1) auf der Codierung 12 abbilden, welcher in seiner Länge gerade der Länge eines Codeworts der Codierung 12 entspricht. Mit anderen Worten, jeder Codeabschnitt 22-4 bis 22-6, welcher vollkommen im Erfassungsbereich der Sensoren 20-1 bis 20-8 liegt, befindet sich im Erfassungsbereich von zumindest zwei, insbesondere drei, benachbarten Sensoren 20-1 bis 20-8. Dies ermöglicht eine besonders feine Abtastung der Codierung 12 und damit eine besonders genaue Auflösung der Relativposition zwischen dem ersten Teil 14 und dem zweiten Teil 18.

Den Sensoren 20-1 bis 20-8 sind Differenzschaltungen 26-1 bis 26-7 und eine Auswerteinheit 24 nachgeschaltet.

Hierbei sind diese Differenzschaltungen 26-1 bis 26-7 bevorzugt jeweils analog ausgebildet und eingangsseitig mit zwei zueinander benachbarten Sensoren 20-1 bis 20-8 gekoppelt, welche analoge Messwerte an die Differenzschaltungen 26-1 bis 26-7 ausgeben (siehe auch die Darstellung in Fig. 2).

Jeder der Differenzschaltungen 26-1 bis 26-7 ist dazu ausgebildet, eine Differenz der erhaltenen Messwerte zu bilden und als Differenzsignal an die Auswerteinheit 24 auszugeben. Anhand dieser Differenzsignale kann die Auswerteinheit 24 zuverlässig und genau die Position der Übergänge zwischen Bereichen von aufeinander folgenden Codeabschnitten erster Art 22-0, 22-2, 22-4, 22-5 sowie 22-9, und aufeinander folgenden Codeabschnitten zweiter Art 22-1, 22-3 sowie 22-6 bis 22-8, identifizieren und lokalisieren. Konkret weist nämlich das Differenzsignal zweier benachbarter Sensoren jeweils dann einen Peak auf, wenn sich ein Übergang zwischen Bereichen von Codeabschnitten 22-0 bis 22-9 unterschiedlicher Art von dem Erfassungsbereich des einen Sensors in den Erfassungsbereich des benachbarten zweiten Sensors bewegt. Folglich ist auf eine relativ einfache und zuverlässige Art und Weise genau zu ermitteln, wo sich die Übergänge zwischen den zusammenhängenden Bereichen von Codeabschnitten gleicher Art in Bezug auf die Erfassungsbereiche der Sensoren befinden. Hieraus kann unter Berücksichtigung der Art der jeweiligen Bereiche von Codeabschnitten die Relativposition zwischen dem ersten Teil und dem zweiten Teil sehr genau bestimmt werden. Dabei kann auf eine zusätzliche Codierung, beispielsweise in Gestalt einer separaten Inkrementalspur, mit einer zugehörigen Auslesevorrichtung verzichtet werden.

Wie in Fig. 2 angedeutet ist, kann jeder der Differenzschaltungen 26-1 bis 26-7 ferner ein Komparator 28-1, 28-2 bzw. 28-3 nachgeschaltet sein. Jeder dieser Komparatoren 28-1 bis 28-3 kann eingangsseitig ferner mit einer Referenzeinheit REF verbunden und dazu ausgebildet sein, das von der zugehörigen Differenzschaltung 26-1 bis 26-7 erhaltene Differenzsignal mit einem von der Referenzeinheit REF erhaltenen Referenzsignal zu vergleichen. Ein hieraus generiertes, insbesondere binäres, Vergleichssignal wird dann zur Analyse an die Auswerteinheit 24 ausgegeben. Mit anderen Worten, es erfolgt keine Digitalisierung der Differenzwerte anhand eines einzelnen festen Schwellenwerts, wie dies üblich ist, sondern anhand eines variierenden Schwellenwerts. Bei ausreichend schneller Variation des Referenzsignals wird effektiv jeder Differenzwert anhand einer Mehrzahl von unterschiedlichen Schwellenwerten binarisiert. Die Auswerteinheit 24 kann dann anhand des entsprechenden Vergleichssignals genauer die konkrete Form des Differenzsignals rekonstruieren und damit die Positionen der Übergänge im Erfassungsbereich der Sensoren 20-1 bis 20-8 sowie die entsprechende Relativposition zwischen dem ersten Teil und dem zweiten Teil genauer bestimmen. Dabei erzeugt die Referenzeinheit insbesondere ein sich, bevorzugt periodisch wiederholendes, zeitlich variierendes Referenzsignal.

Anschaulich gesprochen kann im ersten Komparator 28-1 ein analoger Differenzwert von der ersten Differenzschaltung 26-1 mit beispielsweise drei unterschiedlichen Referenzwerten verglichen werden, welche durch das Referenzsignal vorgegeben werden. Angenommen ein erster Differenzwert liegt bei 80% und die drei durch das Referenzsignal definierten Referenzwerte liegen bei 25%, 50% und 75%. Dann gibt der Komparator 28-1 als binarisiertes Vergleichssignal für den ersten Differenzwert ein "111" an die Auswerteinheit 24 aus, da der erste Differenzwert höher als alle drei Referenzwerte liegt. Hieraus kann die Auswerteinheit 24 darauf schließen, dass der Differenzwert und damit die zugehörige Überdeckung bei mindestens 75% liegt. Im Falle eines zweiten Differenzwerts von beispielsweise 60%, würde das binarisierte Vergleichssignal einer "110" entsprechen. Hieraus kann die Auswerteinheit 24 darauf schließen, dass der zweite Differenzwert und damit die entsprechende Überdeckung zwischen 50% und 75% liegt. Dies erlaubt es der Auswerteinheit 24 eine Unterscheidung zwischen den Situationen der beiden beispielhaften Differenz- bzw. Überdeckungswerte von 80% und 60% vorzunehmen. Basierend darauf kann die Auswerteinheit die Positionen der Übergänge und damit die Relativposition zwischen dem ersten und dem zweiten Teil genauer bestimmen. Bei einer herkömmlichen Ausgestaltung mit einem festen Vergleichswert von beispielsweise 50% wäre diese Unterscheidung nicht möglich, da die Auswerteinheit 24 im binarisierten Signal keinen Unterschied auflösen kann. Das binarisierte Signal würde nämlich für beide Differenzwerte lediglich eine "1" anzeigen.

Alternativ zu diskreten Vergleichssignalen kann das Vergleichssignal auch kontinuierlich verändert werden, wobei beim Umschalten des Komparators das momentan anliegende Vergleichssignal ermittelt wird.

Es ist möglich, ein vordefiniertes periodisches Referenzsignal zu verwenden, oder die Auswerteinheit 24 die genaue Gestalt des Referenzsignals vorgeben zu lassen, um die Positionen der Übergänge insbesondere iterativ besonders genau bestimmen zu können. Konkret könnte die Auswerteinheit 24 bei einer Steuerung des Referenzsignals durch die Auswerteinheit 24 bei einem binarisierten Wert von 1 den Referenzwert vergrößern und bei einem binarisierten Wer von 0 den Referenzwert verkleinern, bis der genaue Differenzwert ausreichend genau bestimmt ist. Natürlich ist es bei einer derartigen Funktionsweise auch denkbar, die unterschiedlichen Komparatoren jeweils mit spezifischen Referenzsignalen zu versorgen. Dies macht die Auswertung der Differenzwerte wohl komplizierter, aber auch effizienter und genauer.

Es versteht sich, dass die hier beschriebene Vorrichtung 10 alternativ zu optischen Sensoren 20-1 bis 20-8 und einer optischen Codierung 12 auch mittels magnetischer, kapazitiver oder induktiver Sensoren sowie eine entsprechende Codierung 12 ersetzt werden kann. Auch ergeben sich für einen Fachmann eine Vielzahl an Modifikationen und Abweichungen von den beschriebenen Ausführungsbeispielen, welche hier wohl nicht explizit beschrieben sind, aber dennoch unter den Schutzumfang der Ansprüche fallen.

Abschließen sei noch darauf hingewiesen, dass die vorliegende Erfindung auch ein entsprechendes Verfahren zur Positions-, Längen, oder Winkelbestimmung betrifft. Ein solches Verfahren umfasst erfindungsgemäß die relative Bewegung eines ersten Teils 14 mit einer absoluten Codierung 12 aus einer Vielzahl von Codeabschnitten 22-0 bis 22-9 erster und zweiter Art relativ zu einem zweiten Teil 18 mit einer Auslesevorrichtung 14, welche mehrere Sensoren 20-1 bis 20-8 zur Erfassung der Codeabschnitte 22-0 bis 22-9 umfasst. Die Bestimmung der Relativposition zwischen dem ersten Teil 14 und dem zweiten Teil 18 erfolgt dann unter Berücksichtigung von mindestens einem Differenzsignal aus den Messwerten zweier benachbarter Sensoren 20-1 bis 20-8.

### Bezuaszeichenliste

- 10: Vorrichtung zur Positions-, Längen-, oder Winkelbestimmung
- 12: Codierung
- 14: erster Teil
- 16: Auslesevorrichtung
- 18: zweiter Teil
- 20-1 bis 20-8: Sensoren
- 22-0 bis 22-9: Codeabschnitte
- 24: Auswerteinheit
- 26-1 bis 26-7: Differenzschaltungen
- 28-1 bis 28-3: Komparatoren
- REF: Referenzeinheit

## Patentansprüche

1. Vorrichtung (10) zur Positions-, Längen-, oder Winkelbestimmung, umfassend:
- einen ersten und einen zweiten Teil (14, 18), welche relativ zueinander bewegbar sind,
- eine an dem ersten Teil (14) angebrachte absolute Codierung (12) aus einer Vielzahl von aufeinander folgenden Codeabschnitten (22-0 bis 22-9) erster Art und zweiter Art,
- eine an dem zweiten Teil (18) angebrachte Auslesevorrichtung (16) zur Erfassung der Codierung (12), wobei die Auslesevorrichtung (16) mehrere Sensoren (20-1 bis 20-8) umfasst, welche jeweils zur Erfassung der Codeabschnitte (22-0 bis 22-9) ausgebildet sind und einen entsprechenden Messwert ausgeben, und
- eine Auswerteinheit (24), welche dazu ausgebildet ist eine Relativposition zwischen dem ersten und dem zweiten Teil (14, 18) zu bestimmen,
**dadurch gekennzeichnet, dass**
die Auslesevorrichtung (16) zumindest eine, insbesondere mehrere, bevorzugt analoge, Differenzschaltungen (26-1, 26-2) umfasst,
wobei die Differenzschaltungen (26-1, 26-2) dazu ausgebildet sind, eine Differenz der Messwerte zweier zueinander benachbarter Sensoren der Auslesevorrichtung (16) zu bilden und als Differenzsignal auszugeben,
wobei die Auswerteinheit (24) dazu ausgebildet ist, die Relativposition zwischen dem ersten und dem zweiten Teil (14, 18) unter Berücksichtigung dieser Differenzsignale zu ermitteln.

2. Vorrichtung (10) nach dem vorhergehenden Anspruch 1,
**dadurch gekennzeichnet, dass**
jede Differenzschaltung (26-1, 26-2) über einen ersten Eingang mit einem ersten Sensor (20-1, 20-2) der Auslesevorrichtung (16) und über einen zweiten Eingang mit einem zweiten Sensor (20-2, 20-3) der Auslesevorrichtung (16), welcher zum ersten Sensor (20-1, 20-2) benachbart liegt, gekoppelt ist.

3. Vorrichtung (10) nach einem der vorhergehenden Ansprüche,
**dadurch gekennzeichnet, dass**
ein Komparator (28-1, 28-2, 28-3) zwischen wenigstens eine, insbesondere jede, der Differenzschaltungen (26-1, 26-2) und die Auswerteinheit (24) geschaltet ist,
wobei der mindestens eine Komparator (28-1, 28-2, 28-3) dazu ausgebildet ist, das Differenzsignal, insbesondere dessen Stromstärke oder Spannung, von der vorgeschalteten Differenzschaltung (26-1, 26-2) mit einem Referenzsignal, insbesondere dessen Stromstärke oder Spannung, einer Referenzeinheit (REF) zu vergleichen und ein entsprechendes Vergleichssignal an die Auswerteinheit (24) auszugeben.

4. Vorrichtung (10) nach dem vorhergehenden Anspruch 3,
**dadurch gekennzeichnet, dass**
die Referenzeinheit (REF) dazu ausgebildet ist, ein, sich insbesondere periodisch wiederholendes, zeitlich variierendes Referenzsignal an die vorgesehenen Komparatoren (28-1, 28-2, 28-3) auszugeben, welches diese dann mit den jeweiligen Messwerten vergleichen.

5. Vorrichtung (10) nach einem der vorhergehenden Ansprüche 3 oder 4, **dadurch gekennzeichnet, dass**
ein Ausgang jeder Differenzschaltung (26-1, 26-2) mit einem ersten Eingang eines zugehörigen Komparators (28-1, 28-2, 28-3) gekoppelt ist und die Referenzeinheit (REF) mit einem zweiten Eingang jedes der vorgesehenen Komparatoren (28-1, 28-2, 28-3) gekoppelt ist.

6. Vorrichtung (10) nach einem der vorhergehenden Ansprüche,
**dadurch gekennzeichnet, dass**
jeder Sensor (20-1 bis 20-8) mit wenigstens einer Differenzschaltung (26-1, 26-2), bevorzugt mit zwei Differenzschaltungen (26-1, 26-2), gekoppelt ist, wobei insbesondere n Sensoren (20-1 bis 20-8) und n-1 Differenzschaltungen (26-1, 26-2) vorgesehen sind, wobei n-2 Sensoren (20-1 bis 20-8) jeweils mit zwei Differenzschaltungen (26-1, 26-2) gekoppelt sind und zwei Sensoren (20-1 bis 20-8) jeweils nur mit einer Differenzschaltung (26-1, 26-2) gekoppelt sind.

7. Vorrichtung (10) nach einem der vorhergehenden Ansprüche,
**dadurch gekennzeichnet, dass**
es sich bei den Sensoren (20-1 bis 20-8) um optische Sensoren, insbesondere in Gestalt von Photodioden, um magnetische Sensoren, um kapazitive Sensoren oder um induktive Sensoren handelt.

8. Vorrichtung (10) nach einem der vorhergehenden Ansprüche,
**dadurch gekennzeichnet, dass**
der erste und der zweite Teil (14, 18) entweder rein translatorisch oder rein rotatorisch relativ zueinander bewegbar sind,
wobei die Sensoren (20-1 bis 20-8) parallel zur Codierung (12) nebeneinander angeordnet sind

9. Vorrichtung (10) nach einem der vorhergehenden Ansprüche,
**dadurch gekennzeichnet, dass**
die Codeabschnitte (22-0 bis 22-9) jeweils eine gleiche Größe und/oder einen gleichen Versatz zueinander aufweisen.

10. Verfahren (100) zur Positions-, Längen-, oder Winkelbestimmung, bei welchem
- ein erster und ein zweiter Teil (14, 18) relativ zueinander bewegt werden,
- an dem ersten Teil (14) eine absolute Codierung (12) angebracht wird, wobei die Codierung (12) aus einer Vielzahl von Codeabschnitten (22-0 bis 22-9) erster und zweiter Art besteht,
- eine an dem zweiten Teil (18) angebrachte Auslesevorrichtung (16) die Codierung (12) erfasst, wobei die Auslesevorrichtung (16) mehrere Sensoren umfasst, welche jeweils zur Erfassung der Codeabschnitte (22-0 bis 22-9) ausgebildet sind und einen entsprechenden Messwert ausgeben,
**dadurch gekennzeichnet, dass**
wenigstens ein Differenzsignal von Messwerten zweier benachbarter Sensoren (20,1 bis 20-8) erzeugt wird und unter Berücksichtigung dieses Differenzsignals eine absolute Relativposition zwischen dem ersten und dem zweiten Teil (14, 18) bestimmt wird.
